# EUROPEAN PATENT SPECIFICATION

(11) **EP 2 352 269 B1**
(45) Date of publication and mention of the grant of the patent: **26.04.2017**
(21) Application number: 09838104.9
(22) Date of filing: 29.07.2009
(51) Int. Cl.: H04L 29/06

(54) **SERVICE ACCESS METHOD AND SYSTEM**
DIENSTLEISTUNGSZUGRIFFSVERFAHREN UND -SYSTEM
PROCÉDÉ D'ACCÈS AU SERVICE ET SYSTÈME

(30) Priority: 30.12.2008 CN 200810241131
(43) Date of publication of application: 03.08.2011
(73) Proprietor: State Grid Corporation of China (SGCC), Beijing 100031 (CN)
(72) Inventor: XIN, Yaozhong, Beijing 100031 (CN); SHANG, Xuewei, Beijing 100031 (CN); MEI, Zheng, Beijing 100031 (CN); MA, Fayong, Beijing 100031 (CN); TAO, Hongzhu, Beijing 100031 (CN); LI, Junliang, Beijing 100031 (CN); ZHAI, Mingyu, Beijing 100031 (CN); YE, Fei, Beijing 100031 (CN); LIU, Baolong, Beijing 100031 (CN); DU, Peng, Beijing 100031 (CN); SUN, Wei, Beijing 100031 (CN); YANG, Qiuheng, Beijing 100031 (CN); PENG, Qingqing, Beijing 100031 (CN)
(74) Representative: Santarelli
(86) International application number: PCT/CN2009/072973
(87) International publication number: WO 2010/081317

(56) References cited:
- CN-A- 1 402 475
- CN-A- 1 402 475
- CN-A- 1 783 882
- CN-A- 101 047 663
- CN-A- 101 459 674
- US-A1- 2005 086 178
- US-A1- 2005 086 330
- CAO,HOUJI.: 'Research on Transmission of Power System Information Based on SOAP.' PAPER FOR MASTER'S DEGREE OF NORTH CHINA ELECTRIC POWER UNIVERSITY. 07 October 2008, pages 20 - 42, XP008168186

## Description

This application claims the priority of Chinese Application No. 200810241131.3 filed with Chinese Patent Office on December 30, 2008, entitled "SERVICE ACCESS METHOD AND SYSTEM".

### TECHNICAL FIELD

The present invention relates to service access, and in particular, to a service access method and system in a power system.

### BACKGROUND ART

Recently, Web (World Wide Web) service becomes the main developing direction of network applications. The Web service employs architecture technology based on SOA (Service Oriented Architecture). In the architecture, services are accessed by standard service access protocols and physical details of the service realization are masked, and thus, the integration ability is strong and the development period of service is shortened. The SOA uses SOAP (Simple Object Access Protocol) to implement access to service.

The SOAP protocol is a text-based application protocol which is developed based on XML language and now is a generally acknowledged service access standard. The SOAP protocol has a good readability and a high flexibility. Currently, Web service has been widely applied in many fields, which has proved the reliability and the maturation of the SOA technology. In US patent publication No. 2005/0086178A1, a web service provider is able to provide a description of a web service which specifies that messages related to business transactions with the web service includes trading partner information and the description includes message header type defining the header structure as some sort of XML schema type.

The SOAP protocol has a good performance. However, since the SOAP protocol is pure text-based, it must be interpreted for running when being used. Thus, the service access speed is affected. Since industries such as electric power industry have characteristics of large scale, complex application and high requirement for real-time, the interpretation running manner of SOAP protocol can not meet application requirements of the electric power industries.

Based on the above problem, a technical problem to be solved by those skilled in the art is to provide service access method and system which can overcome the problem that the service access speed is slow in industries such as electric power industry.

### SUMMARY OF THE INVENTION

Considering above defect, technical problem to be solved by the present invention is to provide a service access method and system for improving the service access speed in industries such as electric power industry.

The present invention provides a service access method comprising:
obtaining service information to be accessed by querying;
encoding the service information in accordance with a message format including two parts of a message header encoded in binary code form and a message body to obtain an access request message, the binary encoding simply describing the service to be accessed and accelerating the procedure for a service provider to interpret the service access protocol;
sending in advance a corresponding relationship between the message header in binary code form and the service information to a service provider;
sending the access request message to the service provider desired to access; and
obtaining a service corresponding to the access request message provided by the service provider.

Preferably, the binary code used by the message header is particularly a binary code defined by a message specification, and the message body is content for making a text-based description for the service information.

Preferably, the binary code defined by the message specification includes 16 bytes.

Preferably, the binary code in the message header has unique corresponding relationship with the application service in an electric power system.

Preferably, said step of obtaining service information to be accessed by querying is: obtaining the service information to be accessed by querying by the service requester.

Preferably, the service requester stores in advance the unique corresponding relationship between the binary code in the message header and corresponding service information.

Preferably, the message body is in a form of XML (Extensible Markup Language).

The present invention further provides a service access system comprising:
a service requester, adapted to send query information to a service agent, obtain location information of a service provider when it registers, send to the service provider the service information to be accessed obtained by querying; the service information comprises two parts of a message header encoded in binary code form and a message body, the binary encoding simply describing the service to be accessed and accelerating the procedure for a service provider to interpret the service access protocol;
a service agent, adapted to receive the registration of the service provider and the query request of the service requester and unify the registration service, query and management; and
a service provider, adapted to receive the service information to be accessed obtained by querying by the service requester, interpret the service information to obtain the particular service corresponding to the message header and provide the particular service to the service requester.

Preferably, the service requester includes:
a service requester storage unit, adapted to store the access request message obtained by encoding the service information in accordance with a message format including two parts of a message header in binary code form and a message body; and
a service requester communication unit, adapted to send the access request message to the service provider desired to access and obtain the service corresponding to the access request message provided by the service provider.

Preferably, the service provider includes:
a service provider storage unit, adapted to store the corresponding relationship between the message header in binary code form sent by the service requester and the service information.

The service access method and system according to the embodiment of the present invention is mainly directed to the application requirements of industries such as electric power industry, and makes an improvement based on SOAP, that is, uses a service access protocol combining a message header in binary code form and a message body in text-based form. Since the message header is in binary code form, the time for the service provider to interpret the protocol is shortened and thus the service access speed is improved. Thus, the SOA may be used widely in the electric power industry.

### BRIEF DESCRIPTION OF THE DRAWINGS

Figure 1 is a diagram of the application of S language according to the present invention.
Figure 2 is a flow chart of the first embodiment of the service access method according to the present invention.
Figure 3 is a flow chart of the second embodiment of the service access method according to the present invention.
Figure 4 is a structural diagram of the first embodiment of the service access system according to the present invention.
Figure 5 is a structural diagram of the second embodiment of the service access system according to the present invention.

### DETAILED DESCRIPTION OF THE EMBODIMENTS

The present invention provides a service access method and system for improving a service access speed in industries such as electric power industry.

As a commonly-acknowledged service access protocol, the SOAP protocol has high flexibility. However, since the SOAP protocol is developed based on XML (Extensible Markup Language), a text-based encoding is used in the SOAP protocol, thus an interpretation is required for running. Thus, it is difficult to improve the service access speed.

Thus, it is difficult to meet the requirement for real time in industries such as electric power industry, which limits the application of the SOAP protocol and SOA in industries such as electric power industry. In order to solve these problems, a technical solution in which an S language is used is proposed by the present invention. The present invention intends to simplify the SOAP protocol for the application characteristics of the electric power industry to improve the service access speed and further facilitate application of the SOA in the electric power industry.

The S language (Simple Service Language) is a service access language used in the electric power industry.

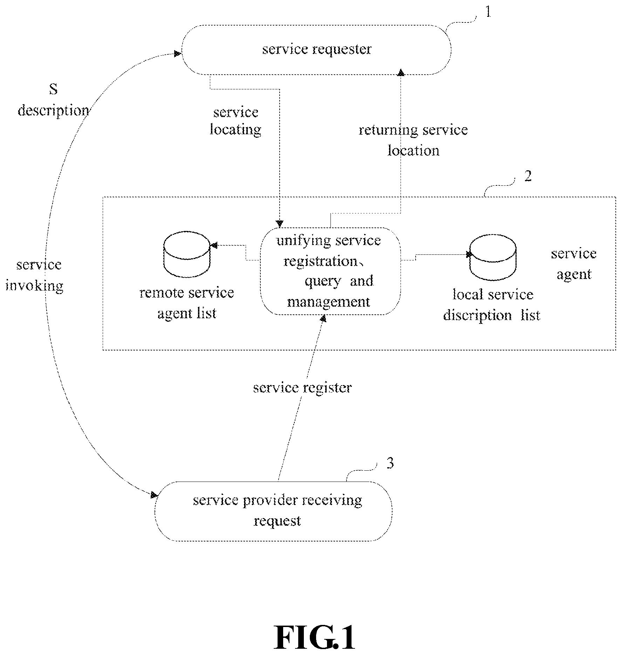

In order to make those skilled in the art better understand S language used in the present invention, a detailed description will be given below with reference to Figure 1.

Figure 1 is a diagram of the application of S language according to the present invention.

A service requester 1 obtains service information to be accessed by querying through a service agent 2, and then accesses a service provider 3 with S language. After receiving the service request from the service requester 1, the service provider 3 interprets the service request protocol encoded with the S language. Because a binary encoding is partly used in the S language, the interpretation procedure for the protocol is accelerated and thus the service access speed is improved. In the S language protocol, a message includes two parts of a message header and a message body. The message header may be 16 bytes defined by a message specification and uses a binary encoding to make simple description for the service to be accessed. Thus, the interpretation procedure for the protocol by the service provider 3 can be accelerated. The message body may make a text-based description for the service information in a manner similar to XML.

For example, the content of message body is as follows:
<scheme://user@host:port/Service ( in=Input, out=Output ) />
Wherein, scheme represents a simplified SOAP protocol;
user represents a user name of a user to access service;
host represents the host where the service is located;
port represents the port number of the service;
Service represents the name of the service; and
in and out represents an input parameter and an output result which is encoded with an M language, respectively.

For example, the message for requesting Huabei state estimation is as follows. Message header:
Short len; //total length of the message
Short seqno; //the sequence number of the message, for a large request message
Short serv; // service id in the electric power industry, e.g. 14 in this example
Short event; // event id in the electric power industry, for transmitting important event
uchar domain; //application domain
uchar ctxt; //application context
Short stid; //task source id, indicating a high layer application
Short dtid; //task destination id, indicating a high layer application
uchar ver_coding; // version number + encoding
uchar mes_type; // frame type according to the M definition, class, variable, index etc.
Message body:
" <scheme://osa@Huabei:10007/StateEstimate (in=grid, out=analysis) /> "

### Category List of Main Service Descriptions

| **Service Identification (ID)** | **Service Name** | **Service Description** | **Basic input parameter** |
|---|---|---|---|
| 1 | ServiceList | Querying service list | Service agent name |
| 2 | Directory | Reading directory | Path |
| 3 | FileTrans | Transmitting file | File name |
| 4 | DataBaseList | Service of reading commercial database list | Server name |
| 5 | TableList | Service of reading commercial database table list | Database name |
| 6 | SQL | Service of accessing commercial database | Sql sentence |
| 7 | GridModelRT | Service of reading real-time grid model | Grid name |
| 8 | GridModelSE | Service of reading state estimation grid model | Grid name |
| 9 | Dispaly | Service of reading grid connection diagram | Picture name |
| 10 | Curve | Service of reading curve | Curve name |
| 11 | Alarm | Alarm service | Alarm type |
| 12 | Log | Log service | Sever, period |
| 13 | ReportTable | Service of reporting table | Table name |
| 14 | StateEstimator | Estimating state | Grid |
| 15 | PowerFlow | Scheduler power flow | Grid, operation |
| 16 | StaticSecurityAnalysis | Analyzing static security | Grid |
| 17 | OnlineStabilityAnalysis | Analyzing online stability | Grid, failure set |
| 18 | VoltageStability | Analyzing voltage stability | Grid, failure set |
| 19 | SmallS ignalStability | Analyzing stability of small signal | Grid |
| 20 | OperationSchedule | Scheduling plan | Plan name, date |
| 21 | LoadForecast | Forecasting load | Grid, date |
| 22 | EnergySettlement | Energy settlement | Grid, date |
| 23 | HydroSchedule | Hydro Scheduling | Grid, date |
| 24 | UnitCommit | Combining unit | Grid, date |
| 25 | DisturbingRecord | Recording failure | Failure name |
| 26 | LowFrequencyOscillation | Oscillation at low frequency | Grid, date |
| 27 | LightingMonitor | Lighting information | Grid, date |

In order to make those skilled in the art better understand the service access method and system according to the present invention, a detailed description of the implementing process of the embodiment will be given below with reference to the drawings.

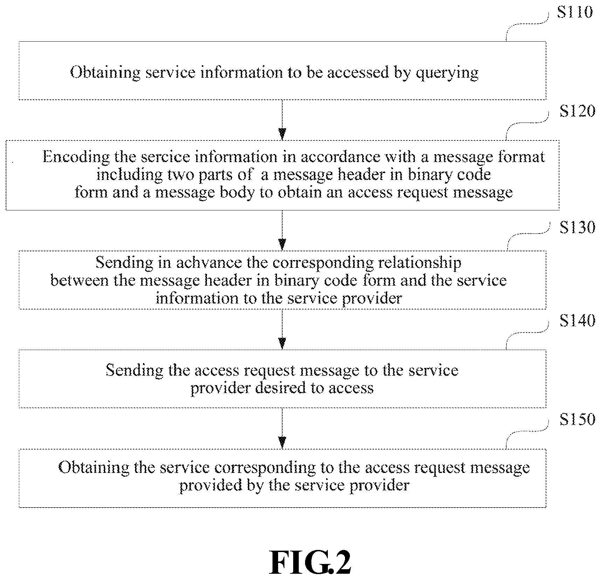

Figure 2 is a flow chart of the first embodiment of the service access method according to the present invention.

The service access method according to the first embodiment of the present invention includes the following steps.

S110: Obtaining service information to be accessed by querying.

The service requester obtains the service information to be accessed by querying, in particular, the query can be made through the service agent.

S120: Encoding the service information in accordance with message format including two parts of a message header in binary code form and a message body to obtain an access request message.

The service requester may use the S language to access the service provider 3. In Particular, the service requester may use the service request encoded with the S language, and since the S language protocol uses the binary encoding, it has two parts of a message header and a message body.

The message header may be 16 bytes defined by the message specification, and simply describes the service to be accessed using binary encoding. This can accelerate the procedure for the service provider 3 to interpret the protocol. Thus, a transparent access to services distributed at different locations may be implemented by the interpretation for the message header using the S language. In Particular, the message body may be in form of XML or in text-based form similar to the XML and make text-based description for the information accessing the service.

S130: Sending in advance the corresponding relationship between the message header in binary code form and the service information to the service provider.

Since the message header may use the binary encoding defined by specification, the corresponding relationship between the message header in binary code form and the service information may be stored on both sides of the service provider and the service requester, so as to facilitate the encoding of the service requester and the interpretation of the service provider.

S140: Sending the access request message to the service provider desired to access.

The service requester sends the access request message to the service provider desired to access.

S150: Obtaining the service corresponding to the access request message provided by the service provider.

The service provider interprets the message header of the access request message received to obtain corresponding service information and then send it to the service requester to implement the access of the service requester.

The service access method according to the embodiment of the present invention is mainly directed to application requirements of industries such as electric power industry, and makes an improvement based on SOAP, that is, uses a service access protocol combining a message header in binary code form and message body in text-based form. Since the message header uses binary code form, the time for the service provider to interpret the protocol is shortened and thus the service access speed is improved. Thus, the SOA may be used widely in the electric power industry.

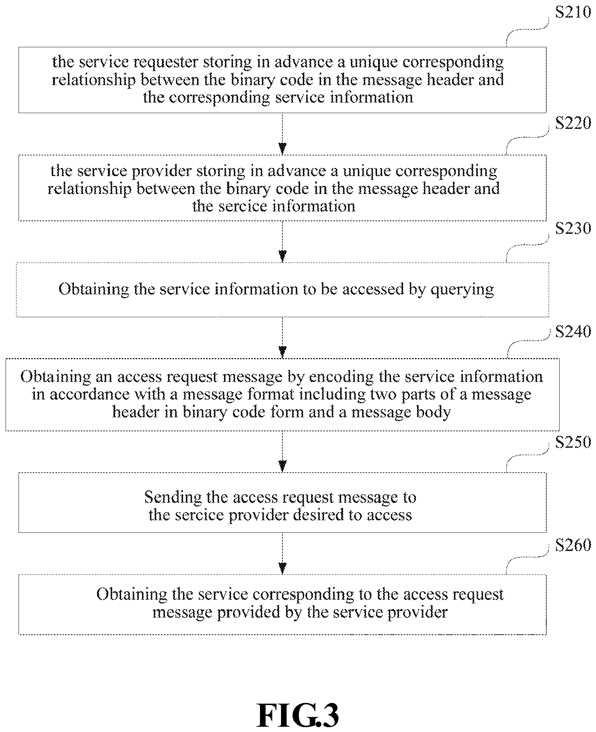

Reference is made to Figure 3, which is a flow chart of the second embodiment of the service access method according to the present invention.

The service access method according to the second embodiment of the present invention may include the following steps:

S210: The service requester storing in advance a unique corresponding relationship between the binary code in the message header and the corresponding service information.

S220: The service provider storing in advance a unique corresponding relationship between the binary code in the message header and the corresponding service information.

S230: Obtaining the service information to be accessed by querying.

The service requester obtains the service information to be accessed by querying, in particular, the query can be made via a service agent.

S240: Obtaining an access request message by encoding the service information in accordance with a message format including two parts of a message header in binary code format and a message body.

The service requester encodes the service information according to the relationship stored in advance at step S210 to obtain the message header, and sends an access request message including the message header and a message body described in text-based format to the service provider.

Since S language protocol uses binary encoding, it includes two parts of a message header and a message body.

The message header may be 16 bytes defined by the message specification and makes simple description for the service to be accessed using binary encoding and thus can accelerate the procedure for the service provider 3 to interpret the protocol. Therefore, a transparent access to services distributed at different locations may be implemented by interpreting the message header using S language. In Particular, the message body may be in form of XML or in text-based form similar to XML, and makes a text-based description for the information accessing the service.

S250: Sending the access request message to the service provider desired to access.

Since the message header may use binary encoding defined by specification and the corresponding relationship between the message header in binary code format and the service information may be stored on both sides of the service provider and the service requester, the encoding of the service requester and the interpretation of the service provider are facilitated.

The service requester sends the access request message to the service provider desired to access.

S260: Obtaining the service corresponding to the access request message provided by the service provider.

The service provider interprets the message header of the access request message received in accordance with the relationship stored in advance in step 220 and obtains the corresponding service information, and then sends it to the service requester to implement the access of the service requester.

The service access method according to the second embodiment of the present invention can further facilitate the use of the service requester, further reduce the access time and improve the access speed since the unique corresponding relationship between the binary code in the message header and the corresponding service information are stored in advance on both sides of the service requester and the service provider.

The service access method according to this embodiment is an application of S language, and the primitive can be used at the corresponding service requester and/or the service provider. In order to use the S language efficiently, the method of using the primitive according to the present invention has advantage of being simple and easy to be used. Moreover, for requirement of the applications of the electric power industry, two application programming models of S language are established according to the present invention. Thus, with the primitive and programming models, a new application can be easily developed or an old application can be easily encapsulated.

Since S language is a service access protocol which is developed for characteristics of industries such as electric power industry, it has the characteristics of being simple and easy to be used and can improve the service access speed. More important, with proposal of the S language, the SOA is introduced into the electric power industry and this has a profound impact for the information system of the electric power industry, particularly, for the development of the scheduling automation system. Thus, a transparent access to services distributed at different locations may be implemented by using the S language. This is important for the interconnection of different scheduling center systems. Moreover, the S language is a loose coupled protocol which makes the scheduling automation system more open and better adapted to the future development of application.

The present invention further provides a service access system for improving a service access speed in industries such as the electric power industry.

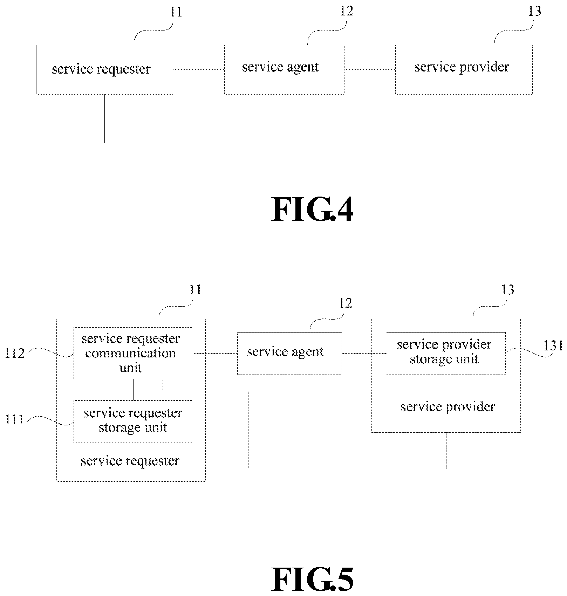

Reference is made to Figure 4, which is a structural diagram of the first embodiment of the service access system according to the present invention.

The service access system according to the first embodiment of the present invention includes a service requester 11, a service agent 12 and a service provider 13.

The service requester 11 sends query information to the service agent 12, obtains location information of the service provider 13 when it registers, and sends to the service provider 13 service information to be accessed obtained by querying. The service information includes two parts of a message header in binary code form and a message body.

The service agent 12 receives the registration of the service provider 13 and the query request of the service requester 11 and unifies the registration service, query and management.

The service provider 13 receives the service information to be accessed obtained by the service requester 13 by querying, interprets the service information, obtains particular service corresponding to the message header and provides the particular service to the service requester 11.

The service access system according to the first embodiment of the present invention is mainly directed to application requirements in industries such as electric power industry, and makes an improvement based on the SOAP. The service requester 11 uses a service access protocol combining a message header in binary code format and a message body in text-based format. Since the message header is in the binary code format, the time for the service provider 13 to interpret the protocol is shortened and thus the service access speed is improved, whereby the SOA can be applied widely in the electric power industry.

Figure 5 is a structural diagram of the second embodiment of the service access system according to the present invention.

The difference between the service access system according to the second embodiment of the present invention and that of the first embodiment lies in that, the service requester 11 further includes a service requester storage unit 111.

The service requester storage unit 111 is adapted to store the access request message obtained by encoding the service information in accordance with a message format including two parts of the message header in binary code format and the message body.

The service requester 11 may further include a separate service requester communication unit 112 for sending the access request message to the service provider 13 desired to access and obtaining service corresponding to the service request message provided by the service provider 13.

The service provider 13 may further include a service provider storage unit 131 for storing a corresponding relationship between the message header in binary code format sent by the service requester 11 and the service information.

The service provider storage unit 131 may also store in other manner the corresponding relationship between the message header in binary code form and the service information.

The service access system according to the embodiment of the present invention can implement any of the above service access methods and have corresponding function, thus detailed description thereof will not be provided herein.

The above descriptions are only preferred embodiments of the service access method and system according to the present invention, it should be noted that various modifications and variations can be made by those skilled in the art, and such modifications and variations also fall within the scope of the present invention.

## Claims

1. A service access method in an electric power system, **characterized in that** the method comprises:
obtaining service information to be accessed by querying;
encoding the service information in accordance with a message format including two parts of a message header encoded in binary code form and a message body to obtain an access request message, the binary encoding simply describing the service to be accessed and accelerating the procedure for a service provider to interpret the service access protocol;
sending the access request message to the service provider desired to access; and
obtaining a service corresponding to the access request message provided by the service provider,
wherein the service provider stores in advance corresponding relationship between the message header in binary code form and the service information.

2. The method according to claim 1, **characterized in that** the binary code used by the message header is particularly binary code defined by a message specification, and the message body is content for making a text-based description for the service information.

3. The method according to claim 2, **characterized in that** the binary code defined by the message specification includes 16 bytes.

4. The method according to claim 2, **characterized in that** the binary code in the message header has the unique corresponding relationship with an application service in the electric power system.

5. The method according to claim 1, **characterized in that** the service requester storing in advance the unique corresponding relationship between the binary code in the message header and the corresponding service information.

6. The method according to claim 2, **characterized in that** the message body is particularly in a form of XML Extensible Markup Language.

7. A service access system in an electric power system, **characterized in that** the system comprises:
a service requester, adapted to obtain service information to be accessed by querying, encode the service information in accordance with a message format including two parts of a message header encoded in binary code form and a message body to obtain an access request message, and send the access request message to the service provider desired to access, the binary encoding simply describing the service to be accessed and accelerating the procedure for a service provider to interpret the service access protocol;
a service provider, adapted to receive the access request message sent by the service requester, interpret message header in the access request message to obtain the particular service corresponding to the message header and provide the particular service to the service requester,
wherein the service provider stores in advance corresponding relationship between the message header in binary code form and the service information.

8. The system according to claim 7, **characterized in that** the service requester comprises:
a service requester storage unit, adapted to store the access request message and the unique corresponding relationship between the binary code in the message header and the corresponding service information ; and
a service requester communication unit, adapted to send the access request message to the service provider desired to access, and obtain service corresponding to the access request message provided by the service provider.

9. The system according to claim 7 or 8, **characterized in that** the service provider comprises:
a service provider storage unit, adapted to store the corresponding relationship between the message header in binary code form sent by the service requester and the service information.

10. The system according to claim 7 or 8, **characterized in that** further comprising a service agent, adapted to receive the query request of the service requester and provide the service information to the service requester.

11. The system according to claim 7, **characterized in that** the binary code used by the message header is particularly binary code defined by a message specification, and the message body is content for making a text-based description for the service information.

12. The system according to claim 11, **characterized in that** the binary code defined by the message specification includes 16 bytes.

13. The system according to claim 11, **characterized in that** the binary code in the message header has the unique corresponding relationship with an application service in the electric power system.

14. The system according to claim 11, **characterized in that** the message body is particularly in a form of XML Extensible Markup Language.

## Patentansprüche

1. Dienstzugriffsverfahren in einem elektrischen Energieversorgungssystem, **dadurch gekennzeichnet, dass** das Verfahren umfasst, dass:
Dienstinformationen, auf die zugegriffen werden soll, durch Abfragen beschafft werden;
die Dienstinformationen in Übereinstimmung mit einem Meldungs-format, das zwei Teile, nämlich einen Meldungskopf, der in einer Binärcodeform codiert ist, und einen Meldungskörper enthält, codiert werden, um eine Zugriffsanforderungsmeldung zu beschaffen, wobei die Binärcodierung einfach den Dienst beschreibt, auf den zugegriffen werden soll, und die Prozedur zum Interpretieren des Dienstzugriffsprotokolls für einen Dienstleister beschleunigt;
die Zugriffsanforderungsmeldung an den Dienstleister gesendet wird, auf den zugegriffen werden soll; und
ein von dem Dienstleister bereitgestellter Dienst beschafft wird, der der Zugriffsanforderungsmeldung entspricht,
wobei der Dienstleister im Voraus eine entsprechende Beziehung zwischen dem Meldungskopf in Binärcodeform und den Dienstinformationen speichert.

2. Verfahren nach Anspruch 1, **dadurch gekennzeichnet, dass** der von dem Meldungskopf verwendete Binärcode ein spezieller Binärcode ist, der durch eine Meldungsspezifikation definiert ist, und dass der Meldungskörper ein Inhalt ist, um eine textbasierte Beschreibung für die Dienstinformationen zu erstellen.

3. Verfahren nach Anspruch 2, **dadurch gekennzeichnet, dass** der durch die Meldungsspezifikation definierte Binärcode 16 Byte enthält.

4. Verfahren nach Anspruch 2, **dadurch gekennzeichnet, dass** der Binärcode in dem Meldungskopf eine eindeutige entsprechende Beziehung mit einem Anwendungsdienst in dem elektrischen Energieversorgungssystem aufweist.

5. Verfahren nach Anspruch 1, **dadurch gekennzeichnet, dass** der Dienstanfordernde im Voraus die eindeutige entsprechende Beziehung zwischen dem Binärcode in dem Meldungskopf und den entsprechenden Dienstinformationen speichert.

6. Verfahren nach Anspruch 2, **dadurch gekennzeichnet, dass** der Meldungskörper speziell in der Form der erweiterbaren Auszeichnungssprache XML vorliegt.

7. Dienstzugriffssystem in einem elektrischen Energieversorgungssystem, **dadurch gekennzeichnet, dass** das System umfasst:
einen Dienstanfordernden, der geeignet ist, um Dienstinformationen, auf die zugegriffen werden soll, durch Abfragen zu beschaffen, um die Dienstinformationen in Übereinstimmung mit einem Meldungsformat, das zwei Teile, nämlich einen Meldungskopf, der in einer Binärcodeform codiert ist, und einen Meldungskörper umfasst, zu codieren, um eine Zugriffsanforderungsmeldung zu beschaffen, und um die Zugriffsanforderungsmeldung an den Dienstleister zu senden, auf den zugegriffen werden soll, wobei die Binärcodierung einfach die Dienst beschreibt, auf den zugegriffen werden soll, und die Prozedur zum Interpretieren des Dienstzugriffsprotokolls für einen Dienstleister beschleunigt;
einen Dienstleister, der geeignet ist, um die Zugriffsanforderungsmeldung zu empfangen, die von dem Dienstanfordernden gesendet wurde, um den Meldungskopf in der Zugriffsanforderungsmeldung zu interpretieren, um den speziellen Dienst zu beschaffen, der dem Meldungskopf entspricht, und um den speziellen Dienst an den Dienstanfordernden zu liefern,
wobei der Dienstleister im Voraus eine entsprechende Beziehung zwischen dem Meldungskopf in Binärcodeform und den Dienstinformationen speichert.

8. System nach Anspruch 7, **dadurch gekennzeichnet, dass** der Dienstanfordernde umfasst:
eine Speichereinheit des Dienstanfordernden, die geeignet ist, um die Zugriffsanforderungsmeldung und die eindeutige entsprechende Beziehung zwischen dem Binärcode in dem Meldungskopf und den entsprechenden Dienstinformationen zu speichern; und
eine Kommunikationseinheit des Dienstanfordernden, die geeignet ist, um die Zugriffsanforderungsmeldung an den Dienstleister zu senden, auf den zugegriffen werden soll, und um einen von dem Dienstleister bereitgestellten Dienst zu beschaffen, der der Zugriffsanforderungsmeldung entspricht.

9. System nach Anspruch 7 oder 8, **dadurch gekennzeichnet, dass** der Dienstleister umfasst:
eine Speichereinheit des Dienstleisters, die geeignet ist, um die entsprechende Beziehung zwischen dem Meldungskopf in Binärcodeform, der von dem Dienstanfordernden gesendet wurde, und den Dienstinformationen zu speichern.

10. System nach Anspruch 7 oder 8, **dadurch gekennzeichnet, dass** es ferner einen Dienstagenten umfasst, der geeignet ist, um die Abfrageanforderung des Dienstanfordernden zu empfangen und um die Dienstinformationen an den Dienstanfordernden zu liefern.

11. System nach Anspruch 7, **dadurch gekennzeichnet, dass** der von dem Meldungskopf verwendete Binärcode ein spezieller Binärcode ist, der durch eine Meldungsspezifikation definiert wird, und der Meldungskörper ein Inhalt ist, um eine textbasierte Beschreibung für die Dienstinformationen zu erstellen.

12. System nach Anspruch 11, **dadurch gekennzeichnet, dass** der durch die Meldungsspezifikation definierte Binärcode 16 Byte enthält.

13. System nach Anspruch 11, **dadurch gekennzeichnet, dass** der Binärcode in dem Meldungskopf eine eindeutige entsprechende Beziehung zu einem Anwendungsdienst in dem elektrischen Energieversorgungssystem aufweist.

14. System nach Anspruch 11, **dadurch gekennzeichnet, dass** der Meldungskörper speziell in der Form der erweiterbaren Auszeichnungssprache XML vorliegt.

## Revendications

1. Procédé d'accès à un service dans un système d'alimentation électrique, le procédé étant **caractérisé en ce qu'**il comprend le fait :
d'obtenir des informations de service devant faire l'objet d'un accès par interrogation ;
de coder les informations de service conformément à un format de message comportant deux parties d'un en-tête de message codé sous forme de code binaire et d'un corps de message pour obtenir un message de demande d'accès, le codage binaire décrivant simplement le service devant faire l'objet d'un accès et accélérant la procédure d'interprétation du protocole d'accès au service pour un fournisseur de service ;
d'envoyer le message de demande d'accès au fournisseur de service souhaitant avoir un accès ; et
d'obtenir un service correspondant au message de demande d'accès fourni par le fournisseur de service,
dans lequel le fournisseur de service stocke à l'avance une relation de correspondance entre l'en-tête de message sous forme de code binaire et les informations de service.

2. Procédé selon la revendication 1, **caractérisé en ce que** le code binaire utilisé par l'en-tête de message est particulièrement un code binaire défini par une spécification de message, et le corps de message représente un contenu pour faire une description textuelle pour les informations de service.

3. Procédé selon la revendication 2, **caractérisé en ce que** le code binaire défini par la spécification de message comporte 16 octets.

4. Procédé selon la revendication 2, **caractérisé en ce que** le code binaire dans l'en-tête de message a la relation de correspondance unique avec un service d'application dans le système d'alimentation électrique.

5. Procédé selon la revendication 1, **caractérisé en ce que** le demandeur de service stocke à l'avance la relation de correspondance unique entre le code binaire dans l'en-tête de message et les informations de service correspondantes.

6. Procédé selon la revendication 2, **caractérisé en ce que** le corps de message est particulièrement sous forme de langage de balisage extensible XML.

7. Système d'accès à un service dans un système d'alimentation électrique, le système étant **caractérisé en ce qu'**il comprend :
un demandeur de service, adapté pour obtenir des informations de service devant faire l'objet d'un accès par interrogation, pour coder les informations de service conformément à un format de message comportant deux parties d'un en-tête de message codé sous forme de code binaire et d'un corps de message pour obtenir un message de demande d'accès, et pour envoyer le message de demande d'accès au fournisseur de service souhaitant avoir un accès, le codage binaire décrivant simplement le service devant faire l'objet d'un accès et accélérant la procédure d'interprétation du protocole d'accès au service pour un fournisseur de service ;
un fournisseur de service, adapté pour recevoir le message de demande d'accès envoyé par le demandeur de service, pour interpréter l'en-tête de message dans le message de demande d'accès afin d'obtenir le service particulier correspondant à l'en-tête de message et fournir le service particulier au demandeur de service,
dans lequel le fournisseur de service stocke à l'avance une relation de correspondance entre l'en-tête de message sous forme de code binaire et les informations de service.

8. Système selon la revendication 7, **caractérisé en ce que** le demandeur de service comprend :
une unité de stockage de demandeur de service, adaptée pour stocker le message de demande d'accès et la relation de correspondance unique entre le code binaire dans l'en-tête de message et les informations de service correspondantes ; et
une unité de communication de demandeur de service, adaptée pour envoyer le message de demande d'accès au fournisseur de service souhaitant avoir un accès et obtenir un service correspondant au message de demande d'accès fourni par le fournisseur de service.

9. Système selon la revendication 7 ou 8, **caractérisé en ce que** le fournisseur de service comprend :
une unité de stockage de fournisseur de service, adaptée pour stocker la relation de correspondance entre l'en-tête de message sous forme de code binaire envoyé par le demandeur de service et les informations de service.

10. Système selon la revendication 7 ou 8, **caractérisé en ce qu'**il comprend en outre un agent de service, adapté pour recevoir la demande d'interrogation du demandeur de service et fournir les informations de service au demandeur de service.

11. Système selon la revendication 7, **caractérisé en ce que** le code binaire utilisé par l'en-tête de message est particulièrement un code binaire défini par une spécification de message, et le corps de message représente un contenu pour faire une description textuelle pour les informations de service.

12. Système selon la revendication 11, **caractérisé en ce que** le code binaire défini par la spécification de message comporte 16 octets.

13. Système selon la revendication 11, **caractérisé en ce que** le code binaire dans l'en-tête de message a la relation de correspondance unique avec un service d'application dans le système d'alimentation électrique.

14. Système selon la revendication 11, **caractérisé en ce que** le corps de message est particulièrement sous la forme d'un langage de balisage extensible XML.
